# EUROPEAN PATENT APPLICATION

(11) **EP 1 120 042 A2**
(43) Date of publication of application: **01.08.2001**
(21) Application number: 01300735.6
(22) Date of filing: 29.01.2001
(51) Int. Cl.: A21D 8/02, A21D 2/00, A21D 2/14, A21D 2/16, A21D 6/00, B65D 65/46

(54) **Biodegradable packaging material**

(30) Priority: 27.01.2000 GB 0001940
(71) Applicant: Green Light Packaging Limited, Toddington, Bedfordschire LU5 6EX (GB)
(72) Inventor: Yeo, Bruce, Toddington, Bedfordshire LU5 6EX (GB)
(74) Representative: Marlow, Nicholas Simon

(57) **Abstract**

A biodegradable packaging material comprising a cooked and extruded dough comprising flour and chlorine is disclosed. Also disclosed is a method for making biodegradable packaging material comprising preparing, cooking and cooking a dough comprising flour and chlorine. Preferably the biodegradable packaging material also includes PVA and cooking oil. The biodegradable packaging material of the invention is colourless and odour free, and can have a bulk density as low as 30g/l.

## Description

The present invention relates to biodegradable packaging material to fill space between a packaged article and the packaging material. It relates particularly to a biodegradable loosefill packaging material.

In the packaging of articles it is often desired to fill space between an article and the packaging material to restrain the article from moving inside the packaging material and being damaged. This can be done using moulded foam blocks, for example expanded polystyrene blocks, conforming to the internal shape of the packaging material and the external shape of the packaged article. The blocks fit around at least part of the packaged article and into the packaging material to hold the packaged article immobile relative to the packaging material. This technique is expensive because the foam blocks must be manufactured specifically for the article and packaging material. An alternative technique is to fill the space between the article and the packaging material with small pieces of foam, such as expanded polystyrene, which prevent or greatly limit movement of the article within the packaging material. These small pieces of foam are known as loosefill.

The foams traditionally used for packaging material present disposal problems after the packaging has been opened and is no longer required. In recent years biodegradable loosefill has been developed. Biodegradable loosefill is an expanded starch material, and is made by heating a starch and water dough which desirably includes polyvinyl alcohol (PVA), extruding it under high pressure and cutting the extruded foam into chips. As the dough leaves the extruder, the water flashes off expanding the dough into a lightweight cellular product. Biodegradable loosefill readily breaks down in damp conditions and presents no disposal problem.

A currently preferred starch source for biodegradable loosefill is flour containing around 9% protein. This quality of flour is relatively cheap and gives a loosefill with excellent properties; a low bulk density of around 6.5g/l, smooth surfaces and a regular shape of chip. The resulting biodegradable loosefill has proved an effective alternative to conventional (non-biodegradable) loosefills; however, it has a distinctive odour caused by the cooking process which can be undesirable. The odour is believed to be due to the liberation of sulphur from the flour protein which occurs at the high temperatures and pressures to which the dough is subjected during heating and extrusion. It has now been found that the odour associated with biodegradable packaging can be substantially reduced or eliminated by the employment of chlorinated flour as the principal ingredient of the dough from which the loosefill is made.

According to a first aspect of the invention there is provided a biodegradable packaging material comprising a cooked and extruded dough, the dough comprising starch, protein and an oxidising agent.

In a second aspect, the invention provides a biodegradable packaging material having a bulk density of no more than about 30g/l, preferably about 7g/l to about 8g/l, comprising a cooked dough, the dough comprising starch, protein and an oxidising agent.

There is also provided according to a third aspect of the invention a method for making biodegradable packaging material comprising: preparing a dough comprising starch, protein and an oxidising agent; cooking the dough under pressure; and extruding the dough.

There is also provided according to a fourth aspect of the invention a method for making biodegradable packaging material having a bulk density of no more than 30g/l comprising: preparing a dough comprising starch, protein and an oxidising agent; and cooking the dough.

Preferably, the oxidising agent is chlorine. The starch and protein is preferably in the form of flour, particularly preferably wheat flour. Most preferably, the dough is formed from chlorinated flour.

The packaging material preferably contains polyvinyl alcohol (PVA). PVA is preferably added at between about 4% and about 20% by weight dry material. It has been found that by adding cooking or vegetable oil to the mixture the amount of PVA required to produce the loosefill satisfactorily can be substantially reduced. The reduction in the quantity of PVA required lowers the cost of production and results in less product shrinkage, which in turn gives a lower bulk density and smoother product surfaces. Addition of oil also increase machine throughput. If oil is not added to the mixture, PVA is added at, preferably, about 5% to about 20%, more preferably about 10% to about 15%, and if oil is added to the extruder, PVA is added at preferably about 4% to about 13%, more preferably about 6% to about 10% by weight dry material (which is chlorinated flour, any other starch source used, any PVA used and any oil used).

Preferably the packaging material of the invention is in the form of loosefill, moulded packaging or block formed packaging.

The amount of water required to make a satisfactory dough is greater than with the hard biscuit flour used to make conventional biodegradable loosefills. Water is preferably added at between about 5% and about 20% by weight of dough. When there is no addition of cooking or vegetable oil to the extruder, preferably the dough contains about 8% to about 20%, more preferably about 14% to about 18%, water by weight. When oil is added to the extruder, preferably the dough contains about 5% to about 18%, more preferably about 12% to 18%, water by weight. When there is no addition of cooking or vegetable oil to the extruder, preferably, the packaging material contains about 4% to about 12%, more preferably about 6% to about 10%, water by weight. When oil is added to the extruder, preferably the packaging material contains about 4% to about 15%, more preferably about 6% to 12%, water by weight. Preferably the dough is cooked at a temperature of between about 150°C and about 290°C, more preferably between about 180°C and about 270°C, and at a pressure of between about 40 bar and about 300 bar, more preferably between about 50 bar and about 130 bar, most preferably between about 70 bar and about 130 bar, for a time between about 20 seconds and about 180 seconds, more preferably between about 30 seconds and about 120 seconds, most preferably between about 35 seconds and about 60 seconds, based on a throughput of between about 70kg/hour and about 400kg/hour.

Preferably when cooking or vegetable oil is added to the extruder, the dough contains about 0.3% to about 2.5%, preferably 0.5% to 2.5%, more preferably about 0.6% to about 1.5% oil by weight.

The dough from which the loosefill of the invention is made preferably contains from about 2% to about 14% protein by weight, more preferably 3% to 7%.

The chlorinated flour can be mixed with up to an equal part of another starch source, such as unchlorinated flour.

Preferably, the chlorinated flour has a chlorine content of at least about 500 ppm, more preferably at least about 1000 ppm. Also preferably the chlorinated flour contains no more than 2200 ppm chlorine. The preferred chlorine content of the chlorinated flour is between about 1200 ppm and about 2000 ppm. Preferably, the dough contains at least about 200 ppm chlorine, more preferably at least about 400 ppm chlorine.

In a preferred embodiment of a method of the invention, the dry ingredients, that is, chlorinated flour any other starch sources used and any PVA used, and the water are introduced into the barrel of a screw extruder such as a twin screw extruder, having a throughput of about 200kg/hour. The preferred composition when there is no oil added to the dough has the following composition:

| | raw materials (% by weight) | dough (% by weight) | product (% by weight) |
|---|---|---|---|
| protein | 3.5 | 3.3 | 3.6 |
| PVA | 13.0 | 12.2 | 13.3 |
| water | 10.9 | 16.3 | 8.0 |
| chlorine | 0.07 | 0.07 | 0.07 |

The balance is other flour components such as starch, traces of bran and minerals.

The temperature of the dough in the barrel is regulated to between about 160° and about 220°C; this has been found to be achieved by a barrel temperature of between about 180°C and about 270°C. The pressure in the extruder is between about 50 bar and about 130 bar. The dough is cooked for between about 35 seconds and about 60 seconds in the extruder and then extruded through the extruder die; a die having a die area of about 10mm² and about 16mm² has been found particularly suitable for the production of loosefill. The extruded material is cut as it leaves the extruder die to form chips of loosefill. The density of the loosefill thus produced is about 8g/l.

The preferred composition when there is subsequent addition of oil to the dough has the following composition:

| | raw materials (% by weight) | dough (% by weight) | product (% by weight) |
|---|---|---|---|
| protein | 4.1 | 3.9 | 4.6 |
| PVA | 8.8 | 8.4 | 9.8 |
| water | 11.8 | 16.5 | 9.9 |
| chlorine | 0.07 | 0.07 | 0.07 |
| oil | 0.8 | 0.8 | 0.8 |

The cooking or vegetable oil is pumped into the inlet end of the extruder at a rate of between 0.7% and 1.5% of the total mass throughput. The dough is then treated as described above. The density of the loosefill thus produced is about 7g/l to about 8g/l.

As will be readily appreciated by those skilled in the art, the temperature, pressure and cooking time and the screw speed of the screw extruder can be varied provided that the specific mechanical energy imparted to the dough is sufficient; typically, the necessary specific mechanical energy needed is about between about 0.10 kW hr/kg and about 0.30 kW hr/kg.

The packaging material of the invention has been found to have a much reduced odour and a paler colour compared to conventional biodegradable packaging material made from wheat flour or wheat flour and PVA. The use of chlorinated flour allows an acceptable biodegradable loosefill to be made using a wide range of flour grades including lower grades of flour than are conventionally used, such as biscuit or cake flour. The addition of cooking or vegetable oil to the dough in the extruder enables the PVA content to be reduced while increasing the mass throughput of the extruder by up to 18%.

## Claims

1. A biodegradable packaging material comprising a cooked and extruded dough, the dough comprising flour and an oxidising agent.

2. A biodegradable packaging material having a bulk density of no more than about 30g/l comprising a cooked dough, the dough comprising flour and an oxidising agent.

3. A biodegradable packaging material according to claims 1 and 2.

4. A biodegradable packaging material according to any preceding claim in which the oxidising agent is chlorine.

5. A biodegradable packaging material according to any preceding claim comprising a cooked and extruded dough, the dough comprising chlorinated flour.

6. A biodegradable packaging material according to any preceding claim further comprising polyvinyl alcohol.

7. A biodegradable packaging material according to any preceding claim in which the dough further comprises cooking or vegetable oil.

8. A biodegradable loosefill packaging material according to any preceding claim.

9. A method for making biodegradable packaging material comprising: preparing a dough comprising flour and an oxidising agent; cooking the dough under pressure; and extruding the dough.

10. A method for making biodegradable packaging material having a bulk density of no more than 30g/l comprising: preparing a dough comprising flour and an oxidising agent; and cooking the dough.

11. A method according to claims 9 and 10.

12. A method according to any of claims 9, 10 or 11 in which the oxidising agent is chlorine.

13. A method according to any of claims 9 to 12 comprising: preparing a dough comprising chlorinated flour; cooking the dough under pressure; and extruding the dough.

14. A method according to any of claims 9 to 13 in which the dough further comprises polyvinyl alcohol.

15. A method according to any of claims 9 to 14 in which the dough further comprises cooking or vegetable oil.

16. A method according to any of claims 9 to 15 comprising: introducing the flour and the oxidising agent and water into the barrel of a screw extruder; mixing the flour, oxidising agent and water to form a dough; and extruding the dough.

17. A method according to claim 16 comprising: introducing chlorinated flour and water into the barrel of a screw extruder; mixing the chlorinated flour and the water to form a dough; and extruding the dough.

18. A method according to claim 16 or 17 in which polyvinyl alcohol is introduced into the barrel of the screw extruder with the flour, oxidising agent and water.

19. A method according to claim 16, 17 or 18 in which cooking or vegetable oil is pumped into the inlet end of the screw extruder.

20. A method according to any of claims 9 to 19 in which the screw extruder is a single screw extruder.

21. A method according to any of claims 9 to 19 in which the screw extruder is a twin screw extruder.

22. A method according to any of claims 9 to 21 in which the dough is formed into loosefill.
